# EUROPEAN PATENT SPECIFICATION

(11) **EP 3 463 016 B1**
(45) Date of publication and mention of the grant of the patent: **22.04.2020**
(21) Application number: 17726288.8
(22) Date of filing: 25.05.2017
(51) Int. Cl.: A47J 37/07

(54) **COOKING APPARATUS**
KOCHVORRICHTUNG
APPAREIL DE CUISSON

(30) Priority: 27.05.2016 IT UA20030894
(43) Date of publication of application: 10.04.2019
(73) Proprietor: Bonacci, Giovanni, 62010 Montefano (MC) (IT)
(72) Inventor: Bonacci, Giovanni, 62010 Montefano (MC) (IT)
(74) Representative: Baldi, Claudio
(86) International application number: PCT/EP2017/062701
(87) International publication number: WO 2017/203014

(56) References cited:
- DE-U- 1 876 620
- FR-A1- 2 864 887
- US-A- 3 527 154
- US-A- 5 176 067
- US-A- 5 276 307
- US-A1- 2006 185 531
- US-A1- 2011 283 990

## Description

The present patent application for industrial invention relates to an innovatively-conceived apparatus for cooking food, in particular grilled meat.

The peculiarities and the advantages of the present invention will be more evident after a short description of the prior art and of its relevant issues.

First of all, it must be said that, in order to roast, the meat to be cooked must be exposed to a high temperature not for too long.

Such a cooking is sometimes made on charcoal in a fire place or a barbecue, in a situation in which the meat to be cooked is placed on a grill that is positioned immediately above the glowing charcoal.

Users who do not have a fireplace or a barbecue normally cook the meat on an electric grill.

Such an apparatus consists in a box body that is open on top, and provided with support feet, wherein a powerful heating element is housed in horizontal position, acting as heat source.

The additional component of a traditional electric grill is a grate intended to be horizontally positioned above the opening of said box body; in view of the above, the meat that is positioned on said grate is exposed to the high heat generated by the heating element.

Preferably the currently available electric grills are provided with the typical "double grates", which are formed of two grilled panels that are hinged on the rear borders, and provided with holding handles that protrude frontally from the front borders.

The correct use of a typical double grate provides for initially separating the two grilled panels in order to position the meat to be cooked in intermediate position between them and then close the two grilled panels, in such a way that the meat can maintain its position firmly between them.

Such a capacity of holding the meat between the two grilled panels ensures a high functional efficacy of the double grate, especially when the double grate is turned around by the user while cooking in order to alternately direct either surface of the meat to be cooked towards said heating element.

Although it is true that said horizontally-positioned electric grills are widely appreciated for their practical use and good cooking results, it is necessary to mention a drawback that is always encountered during their use.

Reference is made to the fact that fat or water tends to drip from the meat exposed to the strong heat generated by said heating element, inevitably falling on the heating element, and generating unpleasant fumes and bad odors.

It is worthless saying that such a phenomenon is generated by simple gravity, exactly because both the grate with the meat and the heating element under the grate are in horizontal position, the grate being disposed in a slightly higher position than the heating element.

In brief, such a condition cannot prevent the liquids dripping from the meat from falling on the red-hot coil of the heating element and causing the aforementioned unpleasant effects.

Although an electric grill has been described so far, the same drawbacks are also encountered when the grill comprises a different type of heat source, such as for example gas or charcoal.

US3527154A discloses an electrical cooking grill that comprises a heating coil, a cooking grid and a housing that supports the cooking grid and the heating coil in horizontal position.

US2011/0283990A1 discloses a charcoal grill comprising a vessel, a receptacle moveably disposed in the vessel and intended to contain charcoal, a cooking grate comprising a horizontal upper grate and a horizontal lower grate. The cooking grate is disposed in the vessel above the receptacle in horizontal position.

The US3527154A and US2011/0283990A1 priority documents disclose a cooking grate disposed in horizontal position above the heat source. Such position of the cooking grate makes the grease fall onto the heat source (electric grill or charcoal). Consequently, US3527154A and US2011/0283990A1 are impaired by the technical drawback of generating fumes and bad odors because of the fat that drips on the heat source.

US5276307 discloses an outdoor grill comprising a base with an upper opening, a heating element disposed in lower position in the base and provided with an annular shape, a drip tray supported by the base, and a cooking grill disposed above the drip tray and supported by the base. Such a cooking grill is disposed along a horizontal plane. The US5276307 priority document solves the problem of the fat dripping on the electric grill using an annular heating element in such a way that the fat can drip inside the annular shape without touching the heating element. However, US5276307 is impaired by some drawbacks in terms of cooking. As a matter of fact, the annular heating element does not guarantee a uniform cooking of the food disposed on the cooking grill.

US5176067 discloses an indoor grill comprising a base with an upper opening, a reflector positioned within the base and supported by the base, a heating element disposed in the reflector, in such a way that the base and the reflector support the heating element, a cooking grill supported by the base above or under the heating element in horizontal position. The US5176067 document solves the problem of the fat dripping on the heating element by using a cooking grill that can be disposed under the heating element. However, US5176067 is impaired by the fact that the positioning of the cooking grill under the heating element is complicated and not very practical, making it difficult to turn the meat around while cooking.

The purpose of the present invention is to disclose a cooking apparatus that allows for cooking the food uniformly, in a practical and easy way, thus preventing the generation of fumes and bad odors.

Another purpose is to disclose a cooking apparatus according to the invention wherein the distance between the food and the heat source can be adjusted.

Another purpose is to disclose a kitchen extractor hood that is internally provided with the cooking apparatus.

The idea of the present invention is to provide a cooking apparatus intended to operate not in a horizontal position, but in a sub-vertical upright position, that is to say in an inclined position with respect to a vertical plane.

In such a case, a similar upright position is given both to the heat source and to the grill intended to support the meat to be exposed to the heat generated by the heat source.

The fact that the grill of the new cooking apparatus no longer operates in an overlapped position with respect to the heat source - as in traditional horizontal grills - but in the front of the heat source has permitted to achieve the aforementioned purpose.

In fact, because of the upright position of the heat source and of the grill, the cooking liquids that inevitably drip from the meat cannot fall by gravity onto the heat source in view of the fact that the heat source is no longer positioned under the cooking grill.

Within such a solution, the additional purpose of the present invention is to provide the cooking apparatus of the invention with a lean, light-weighed, inexpensive and easy to make structure.

Additional advantages are obtained from the optional characteristics of the invention that are the object of the depending claims, which are to be considered as an integral part of the present description.

The cooking apparatus of the invention **is defined in claim 1.**

Such a structure of the supporting frame prevents the grease that drips from the meat supported by the supporting device from falling on the heat source and from generating fumes and bad odors.

For the sake of clarity, the description of the cooking apparatus of the invention continues with reference to the attached drawings, which have a merely illustrative, not limiting value, wherein:
- Fig. 1 is an exploded axonometric view of the cooking apparatus of the invention;
- Fig. 2 is an axonometric view of the supporting frame while it supports the heat source;
- Fig. 3 is a diagrammatic side view of the cooking apparatus according to the invention sectioned with a vertical plane passing through the holding handle of the heat source;
- Fig. 4 is a diagrammatic axonometric view of the cooking apparatus of the invention according to a second embodiment;
- Fig. 5 is a diagrammatic axonometric view of a hood according to the invention comprising the cooking apparatus of Fig. 1;
- Fig. 6 is an axonometric exploded view of a third embodiment of the cooking apparatus of the invention;
- Fig. 7 is a diagrammatic side view of the cooking apparatus of Fig. 6 sectioned with a vertical plane passing through the holding handle of the heat source;
- Fig. 8 is the same as Fig. 7, except for it shows a back-piece of the cooking apparatus according to the present invention with a different inclination with respect to a vertical axis.

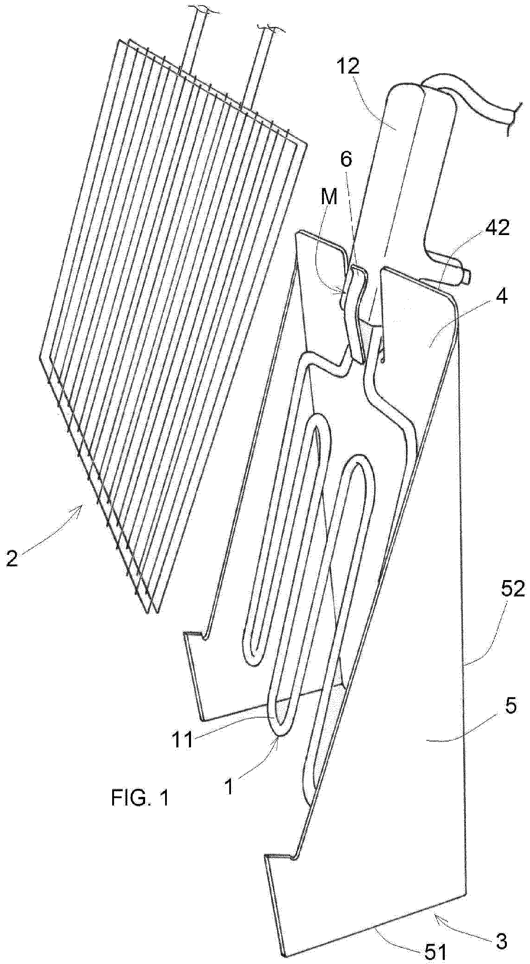

With reference to Fig. 1, the cooking apparatus according to the invention comprises:
- a heat source (1); in particular, said heat source (1) is an electric grill comprising a coil (11) and a holding handle (12);
- a supporting device (2) for food;
- a supporting frame (3) for supporting both the electric grill and the supporting device (2) for food.

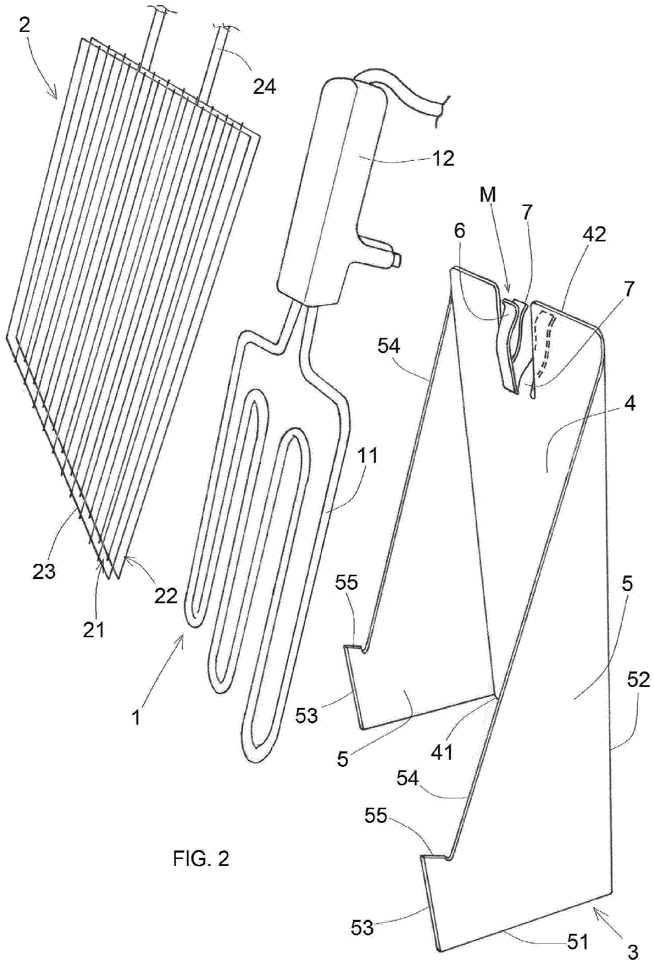

Said supporting device (2) is traditional and is composed of two grills (21,22) that define a compartment (V) where to place the food to be cooked; said supporting device (2) comprises a lateral border (23) and a holding handle (24), as shown in Figs. 1 and 2.

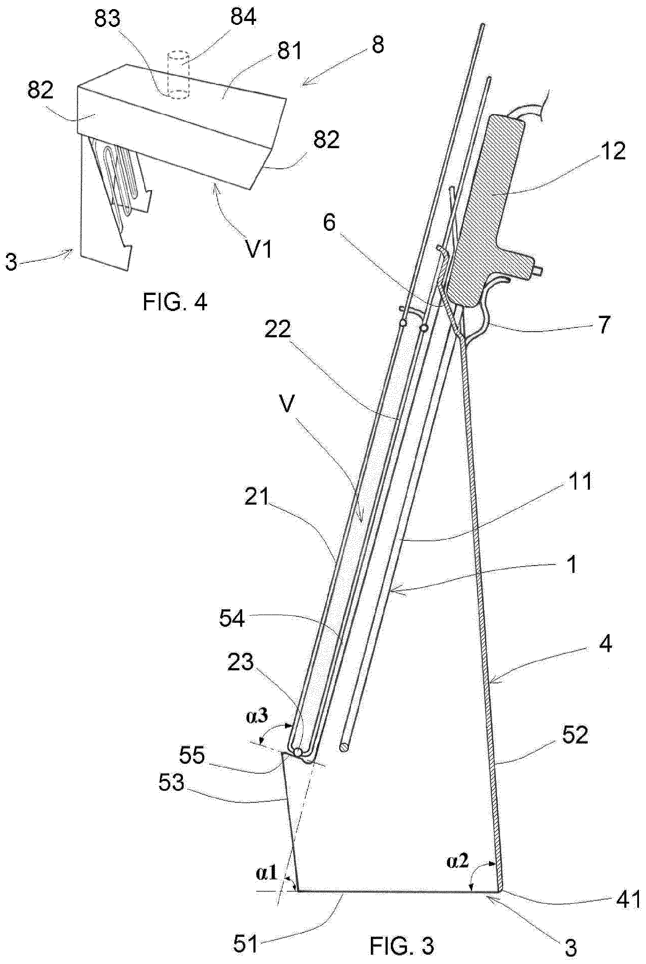

With reference to Figs. 2 and 3, said supporting frame (3) comprises:
- a central **wall** (4) comprising a lower border (41) and an upper border (42);
- two lateral **walls** (5) connected to said central **wall** (4);
said lateral **walls** (5) comprise a lower supporting border (51) and a back vertical border (52) connected to said central **wall** (4); said lateral **walls** (5) also comprise a front lower border (53), a front upper border (54) and a front intermediate border (55) connecting said front lower border (53) with said front upper border (54).

It must be noted that, while cooking the food, the supporting device (2) for food is placed onto the front upper borders (54) of the two lateral walls (5) and has its lateral border (23) in contact with the front intermediate borders (55) of the lateral **walls** (5), as shown in Fig. 3.

Still with reference to Fig. 3, the cooking apparatus according to the invention has some special geometries that achieve the aforementioned purposes, and namely:
- said front upper border (54) of the lateral **walls** (5) is inclined with respect to the lower supporting border (51) by an angle (α1) comprised between 64° and 77°, preferably 70°;
- said lower supporting border (51) of the lateral **walls** (5) is inclined with respect to the back vertical border (52) by an angle (α2) comprised between 84° and 88°, preferably 86°;
- said front upper border (54) of the lateral **walls** (5) is inclined with respect to the lower supporting border (55) by an angle (α1) comprised between 90° and 80°, preferably 90°.

With reference to Figs. 1 and 2, the cooking apparatus comprises supporting means (M) for the electric grill, provided on the upper border (42) of the central **wall** (4). Said supporting means (M) consist in flexible tongues that support the holding handle (12) of the electric grill.

More precisely, said supporting means (M) comprise one front central tongue (6) and two back lateral tongues (7).

As shown in Fig. 1, said front central tongue (6) cooperates with the upper surface of the holding handle (12) and said two back lateral tongues (7) cooperate with the lower surface of the holding handle (12).

The supporting frame (3) of the invention is also suitable for being used with traditional electric grills that normally comprise a safety button that enables the switching-on of the electric grill when the electric grill is in operating position, that is to say it is placed correctly onto a supporting frame; for this reason, said front central tongue (6) is shaped in such a way to press said safety button when the electric grill is correctly placed on the supporting frame (3) in operating position.

According to a second embodiment, which is diagrammatically shown in Fig. 4, the cooking apparatus of the invention comprises a box frame (8) comprising a central wall (81) and four lateral **walls** (82) perpendicular to said central wall (81).

Said box frame (8) comprises a compartment (V1) defined by said central wall (81) and by four lateral **walls** (82); said compartment (V1) has suitable dimensions in order to contain the supporting frame (3), in such a way that, when the cooking apparatus is not used, the supporting frame (3) is contained inside said box frame (8).

According to a preferred embodiment, moreover, said box frame (8) is hinged on the upper border (42) of the central **wall** (4) of the supporting frame (3) and can be:
- in an idle position (not shown in the attached figures), wherein the supporting frame (3) is contained inside the compartment (V1) of the box frame (8);
- in an operating position, wherein it is disposed with its central wall (81) in a substantially perpendicular position with respect to the central **wall** (4) of the supporting frame (3), as shown in Fig. 4.

Still with reference to Fig. 4, said central wall (81) has a hole (83) intended to let the cooking fumes pass through.

Advantageously, said box frame (8) can be provided, in correspondence of said hole (83), with means (84) intended to put said hole (83) in communication with extracting means of the cooking fumes; said means (84) are diagrammatically represented in Fig. 4 with a connection nozzle whereon a preferably flexible hose can be connected, upstream of which an extracting device such as the one provided in a kitchen extractor hood is installed.

Said box frame (8) may comprise locking means in order to be locked in operating position; said means may consist at least in an automatic button intended to cooperate in a hole in such a way to be elastically released as soon as it is aligned with said hole, or in a pair of toothed crowns provided with a spring that pushes one crown against the other.

Finally, it must be noted that the supporting frame (3) is monolithic and said central **wall** (4), the supporting means (M) and said lateral **walls** (5) are made in one piece from a sheet metal that is first cut and then bent in correspondence of both the back vertical border (52) of the lateral **walls** (5) and the flexible tongues (6,7).

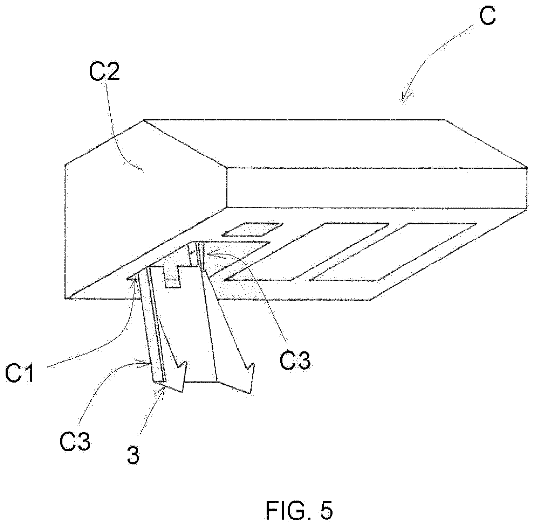

Fig. 5 shows a kitchen extractor hood according to the invention, indicated with reference letter (C) and comprising the cooking apparatus of the invention.

The hood (C) comprises a frame (C2) that defines a compartment, intended to house the cooking apparatus, and provided with a lower opening (C1) used to access the compartment, through which the cooking apparatus can pass in order to protrude from the compartment or to be inserted in the compartment of the frame (C2).

The hood (C) also comprises a pair of guides (C3) connected to the cooking apparatus and to the frame (C2) to make the cooking apparatus slide with respect to the frame (C2) in order to introduce or extract the cooking apparatus into or from the compartment of the frame (C2) through the opening (C1). Each guide (C3) comprises a first element fixed to the frame (C2) in correspondence of the opening (C1) and disposed inside the compartment, and a second element slidably mounted on the first element. The second element is fixed to the cooking apparatus, in such a way that, by moving the second element with respect to the first element, the cooking apparatus can be extracted from the compartment or can be inserted in the compartment of the frame (C2). Advantageously, said guides (C3) have a substantially vertical position.

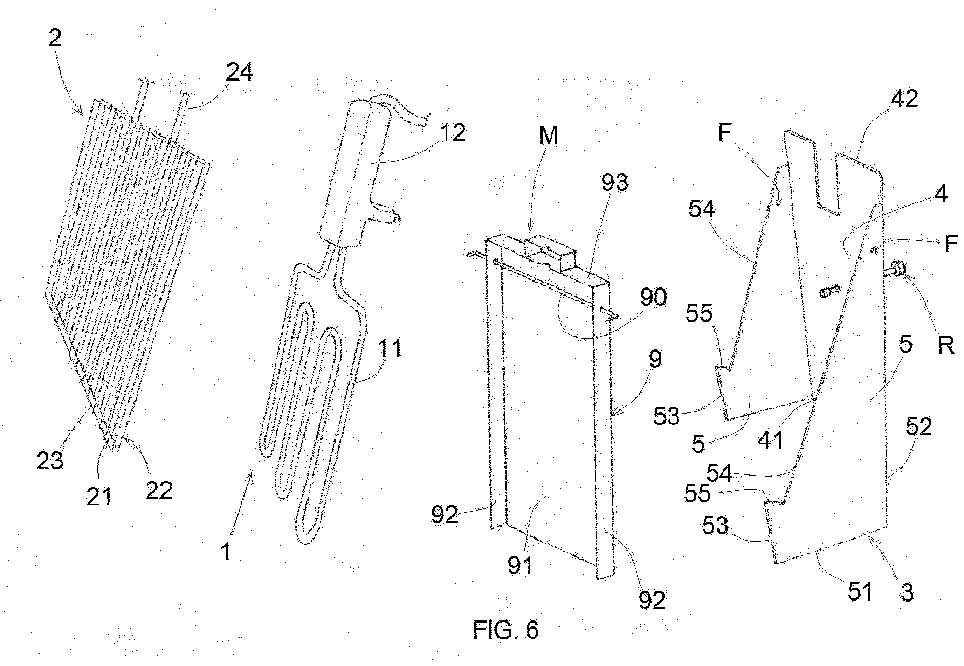

Figs. 6 to 8 show a third embodiment of the cooking apparatus according to the invention. In the following description the parts that are identical or correspond to the parts described above are identified with the same numerals, omitting their detailed description.

The cooking apparatus comprises a supporting element (9) disposed between the heat source (1) and the supporting frame (3).

The supporting element (9) comprises a substantially vertical back wall (91) with rectangular shape, two lateral **walls** (92) and one upper **wall** (93).

The supporting element (9) is hinged in upper position to the lateral **walls** (5) of the supporting frame (3) by means of a pin (90) inserted in holes (F) obtained on said lateral **walls** (5). Because of the supporting element (9), on one side the overheating of the frame (3) can be prevented, and on the other side the heat can be completely concentrated towards the supporting device (2) intended to contain the food to be cooked.

It must be noted that according to said third embodiment the supporting means (M) for the electric grill are provided on the supporting element (9), in correspondence of the upper **wall** (93). In view of the above, the supporting element (9) supports the electric grill. Advantageously, the supporting means (M) comprise a compartment wherein a portion of the holding handle (12) of the electric grill is inserted. The supporting means (M) are configured in such a way to press the safety button of the electric grill.

Alternatively, the support means (M) comprise flexible tongues.

The cooking apparatus comprises adjustment means (R) provided on the supporting frame (3) in order to adjust the distance between the supporting frame (3) and the supporting element (9) and, consequently, the distance between the heat source (1) and the supporting device (2) that supports the food to be cooked. Said adjustment means (R) comprise a screw that is screwed into a threaded hole obtained on the central **wall** (4) of the supporting frame (3).

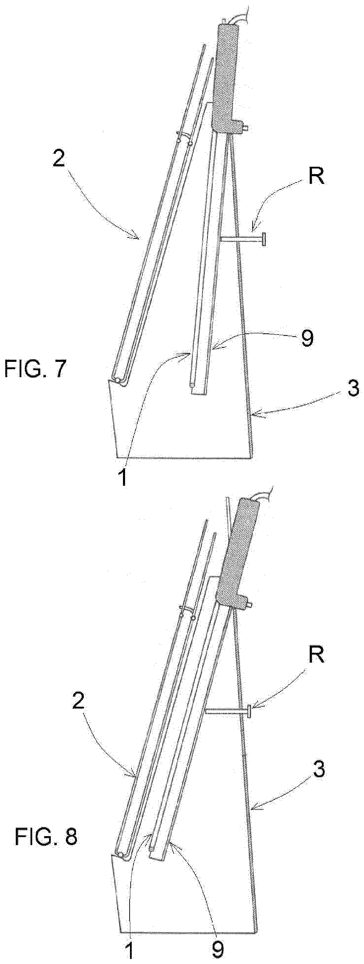

The screw comprises a first end that is intended to be moved in order to tighten/untighten the screw inside the threaded hole and a second end that is disposed in contact with the back wall (91) of the supporting element (9). As shown in Figs. 7 and 8, the tightening or untightening of the screw moves the supporting element (9), and consequently the heat source (1), closer or farther with respect to the supporting device (2) for food, which is placed on the front upper border of the lateral **walls** (5). In view of the above, the food can be exposed to a higher or lower heat.

Although it is not shown in the figures, the supporting element (9) can be a receptacle that comprises a compartment, intended to contain a gas supply device or charcoal. In such a case, the heat source (1) is the charcoal or the gas supply device. Advantageously, a front wall of the supporting element (9) is provided with openings to let the heat out of the compartment of the supporting element (9).

## Claims

1. Cooking apparatus comprising:
- a heat source (1);
- a supporting device (2) for food; said supporting device (2) being composed of two grills (21, 22) that define a compartment (V) where to place the food to be cooked; said supporting device (2) comprising a lateral edge (23) and a holding handle (24);
- a supporting frame (3) to support the supporting device (2);
said supporting frame (3) comprises:
- a central wall (4) disposed in a substantial vertical position; said central wall (4) comprising a lower border (41) and an upper border (42);
- two lateral walls (5) connected to said central wall (4) and disposed orthogonal with respect to said central wall (4);
each lateral wall (5) comprising:
- a lower supporting edge (51) suitable to be placed on a horizontal surface,
- a back vertical edge (52) connected to said central wall (4);
- a front lower border (53),
- a front upper border (54), and
- a front intermediate border (55) connecting said front lower border (53) with said front upper border (54);
wherein
said front upper border (54) of the lateral walls (5) is inclined with respect to the lower supporting edge (51) by an angle (α1) comprised between 64° and 77°;
said front upper border (54) of the lateral walls (5) is inclined with respect to the front intermediate border (55) by an angle (α3) comprised between 80° and 90°;
said heat source (1) is an electric grill and said cooking apparatus comprising supporting means (M) to support said electric grill between said lateral walls (4) of the supporting frame;
said supporting device (2) for food being placed onto the front upper borders (54) of the two lateral walls (5) and the lateral border (23) of the supporting device being in contact with the front intermediate borders (55) of the lateral walls (5), so that the grills (21, 22) of the supporting device are inclined of an angle comprised between 64° and 77° with respect to an horizontal surface.

2. The cooking apparatus according to claim 1, wherein said lower supporting border (51) of the lateral walls (5) is inclined with respect to the back vertical border (52) by an angle (α2) comprised between 84° and 88°,.

3. The cooking apparatus according to one of the preceding claims, wherein said central wall (4) and said lateral walls (5) are made in one piece from a sheet metal that is first cut and then bent in correspondence of the back vertical border (52) of the lateral walls (5).

4. The cooking apparatus of anyone of the preceding claims, wherein the supporting means (M) comprise a compartment wherein a portion of a holding handle (12) of the electric grill is inserted.

5. The cooking apparatus of anyone of the claims 1 to 3, wherein the supporting means (M) consist in flexible tongues (6, 7) that support an holding handle (12) of the electric grill.

6. The cooking apparatus of claim 5, wherein said supporting means (M) comprise a front central tongue (6) and two back lateral tongues (7); said front central tongue (6) cooperating with the upper surface of the holding handle (12) and said two back lateral tongues (7) cooperating with the lower surface of the holding handle (12).

7. The cooking apparatus of anyone of the preceding claims, wherein said electric grill comprises a safety button that enables the switching-on of the electric grill and wherein said supporting means (M) press said safety button.

8. The cooking apparatus according to one of the preceding claims, comprising a supporting element (9) disposed between the heat source (1) and the supporting frame (3) to support the heat source (1).

9. The cooking apparatus of claim 8, comprising adjustment means (R) provided on the supporting frame (3) in order to adjust the distance between the supporting frame (3) and the supporting element (9).

10. The cooking apparatus of claim 9, wherein the adjustment means (R) comprise a screw that is tightened into a threaded hole obtained on the central wall (4) of the supporting frame (3).

11. The cooking apparatus of any one of claims 8 to 10, wherein said supporting element (9) comprises a pin (90) that hinges said supporting element (9) to the supporting frame (3); said pin (90) being inserted into holes (F) obtained on the lateral walls (5) of the supporting frame (3).

12. The cooking apparatus according to one of claims 8 to 11, wherein said supporting means (M) are provided on the supporting element (9).

13. The cooking device of any one of claims 1 to 7, wherein the supporting means (M) for said electric grill are provided in correspondence of the upper border (42) of the central wall (4).

14. The cooking apparatus of one of the preceding claims, comprising a box frame (8) comprising a central wall (81) and four lateral walls (82) perpendicular to said central wall (81); said box frame (8) comprising a compartment (V1) defined by said central wall (81) and by said four lateral walls (82); said compartment (V1) being suitably dimensioned to contain the supporting frame (3); said box frame (8) being hinged on the upper border (42) of the central wall (4) of the supporting frame (3) and suitable for being in an idle position, wherein the supporting frame (3) is contained inside the compartment (V1) of the box frame (8), and in an operating position wherein it is disposed with its central wall (81) in substantially perpendicular position with respect to the central wall (4) of the supporting frame (3); said central wall (81) of the box frame being provided with a hole (83) intended to let the cooking fumes pass through; said box frame (8) being provided, in correspondence of said hole (83), with means (84) intended to put the hole (83) in communication with extracting means of the cooking fumes.

15. Extractor hood (C) comprising:
- a cooking apparatus according to any one of claims 1 to 14;
- a frame (C2) comprising a compartment and an opening (C1) that provides access to the compartment;
- at least one guide (C3) connected to the cooking apparatus and to the frame (C2) in order to move the cooking apparatus with respect to the frame (C2) in order to introduce or extract the cooking apparatus into or from the compartment of the frame (C2) through the opening (C1).

16. The hood (C) of claim 15, wherein said at least one guide (C3) comprises a first element fixed to the frame (C2) and disposed inside the compartment, and a second element slidably mounted on the first element; said second element being fixed to the cooking apparatus.

## Patentansprüche

1. Kochvorrichtung, umfassend:
- eine Heizquelle (1);
- eine Aufnahmevorrichtung (2) für Speisen; wobei die Aufnahmevorrichtung (2) aus zwei Grills (21, 22) besteht, die ein Fach (V) definieren, in dem die zu kochenden Speisen angeordnet werden; wobei die Aufnahmevorrichtung (2) eine seitliche Kante (23) und einen Haltegriff (24) umfasst;
- einen Tragrahmen (3) zum Tragen der Aufnahmevorrichtung (2);
wobei der Tragrahmen (3) umfasst:
- eine zentrale Wand (4), die in einer im Wesentlichen vertikalen Position angeordnet ist; wobei die zentrale Wand (4) eine untere Kante (41) und eine obere Kante (42) umfasst;
- zwei seitliche Wände (5), die mit der zentralen Wand (4) verbunden und rechtwinklig in Bezug auf die zentrale Wand (4) angeordnet sind;
wobei jede seitliche Wand (5) umfasst:
- eine untere Auflagekante (51), die dazu geeignet ist, auf einer horizontalen Fläche angeordnet zu werden;
- eine hintere vertikale Kante (52), die mit der zentralen Wand (4) verbunden ist;
- eine vordere untere Kante (53),
- eine vordere obere Kante (54) und
- eine vordere Zwischenkante (55), die die vordere untere Kante (53) mit der vorderen oberen Kante (54) verbindet;
wobei
die vordere obere Kante (54) der seitlichen Wände (5) in Bezug auf die untere Auflagekante (51) in einem Winkel (α1) zwischen 64° und 77° geneigt ist;
die vordere obere Kante (54) der seitlichen Wände (5) in Bezug auf die vordere Zwischenkante (55) in einem Winkel (α3) zwischen 80° und 90° geneigt ist;
die Heizquelle (1) ein Elektrogrill ist und die Kochvorrichtung Haltemittel (M) zum Halten des Elektrogrills zwischen den seitlichen Wänden (4) des Tragrahmens umfasst;
wobei die Aufnahmevorrichtung (2) für Speisen auf den vorderen oberen Kanten (54) der beiden seitlichen Wände (5) angeordnet ist und die seitliche Kante (23) der Aufnahmevorrichtung im Kontakt mit den vorderen Zwischenkanten (55) der seitlichen Wände (5) ist, so dass die Grills (21, 22) der Aufnahmevorrichtung in einem Winkel zwischen 64° und 77° in Bezug auf eine horizontale Ebene geneigt sind.

2. Kochvorrichtung nach Anspruch 1, wobei die untere Auflagekante (51) der seitlichen Wände (5) in Bezug auf die hintere vertikale Kante (52) in einem Winkel (α2) zwischen 84° und 88° geneigt ist.

3. Kochvorrichtung nach einem der vorstehenden Ansprüche, wobei die zentrale Wand (4) und die seitlichen Wände (5) einstückig aus einem Blech hergestellt sind, das zuerst zugeschnitten und dann an der hinteren vertikalen Kante (52) der seitlichen Wände (5) gebogen wird.

4. Kochvorrichtung nach einem der vorstehenden Ansprüche, wobei die Haltemittel (M) ein Fach umfassen, in dem ein Anteil eines Haltegriffs (12) des Elektrogrills eingesetzt ist.

5. Kochvorrichtung nach einem der Ansprüche 1 bis 3, wobei die Haltemittel (M) aus elastischen Zungen (6, 7) bestehen, die einen Haltegriff (12) des Elektrogrills abstützen.

6. Kochvorrichtung nach Anspruch 5, wobei die Haltemittel (M) eine vordere zentrale Zunge (6) und zwei hintere seitliche Zungen (7) umfassen; wobei die vordere zentrale Zunge (6) mit der oberen Fläche des Haltegriffs (12) zusammenwirken und die zwei hinteren seitlichen Zungen (7) mit der unteren Fläche des Haltegriffs (12) zusammenwirken.

7. Kochvorrichtung nach einem der vorstehenden Ansprüche, wobei der Elektrogrill eine Sicherheitstaste umfasst, die die Einschaltung des Elektrogrills ermöglicht und wobei die Haltemittel (M) auf die Sicherheitstaste drücken.

8. Kochvorrichtung nach einem der vorstehenden Ansprüche, umfassend ein Stützelement (9), das zwischen der Heizquelle (1) und dem Tragrahmen (3) angeordnet ist, um die Heizquelle (1) abzustützen.

9. Kochvorrichtung nach Anspruch 8, umfassend Einstellmittel (R), die auf dem Tragrahmen (3) vorgesehen sind, um den Abstand zwischen dem Tragrahmen (3) und dem Stützelement (9) einzustellen.

10. Kochvorrichtung nach Anspruch 9, wobei die Einstellmittel (R) eine Schraube umfassen, die in ein Gewindeloch eingedreht wird, das auf der zentralen Wand (4) des Tragrahmens (3) herausgearbeitet ist.

11. Kochvorrichtung nach einem der Ansprüche 8 bis 10, wobei das Stützelement (9) einen Stift (90) umfasst, der das Stützelement (9) an dem Tragrahmen (3) anlenkt; wobei der Stift (90) in Löcher (F) eingesetzt ist, die auf den seitlichen Wänden (5) des Tragrahmens (3) herausgearbeitet sind.

12. Kochvorrichtung nach einem der Ansprüche 8 bis 11, wobei die Haltemittel (M) auf dem Stützelement (9) vorgesehen sind.

13. Kochvorrichtung nach einem der Ansprüche 1 bis 7, wobei die Haltemittel (M) für den Elektrogrill an der oberen Kante (42) der zentralen Wand (4) vorgesehen sind.

14. Kochvorrichtung nach einem der vorstehenden Ansprüche, umfassend einen kastenförmigen Rahmen (8), umfassend eine zentrale Wand (81) und vier seitliche Wände (82), die senkrecht zu der zentralen Wand (81) stehen; wobei der kastenförmige Rahmen (8) ein Fach (V1) umfasst, das von der zentralen Wand (81) und den vier seitlichen Wänden (82) begrenzt ist; wobei das Fach (V1) entsprechend bemessen ist, um den Stützrahmen (3) aufzunehmen; wobei der kastenförmige Rahmen (8) an der oberen Kante (42) der zentralen Wand (4) des Stützrahmens (3) angelenkt und in der Lage ist, eine Ruhestellung einzunehmen, in der der Stützrahmen (3) im Inneren des Faches (V1) des kastenförmigen Rahmens (8) aufgenommen ist, und eine Betriebsstellung, in der er mit seiner zentralen Wand (81) im Wesentlichen senkrecht zu der zentralen Wand (4) des Stützrahmens (3) steht; wobei die zentrale Wand (81) des kastenförmigen Rahmens ein Loch (83) aufweist, das dazu bestimmt ist, von Kochdünsten durchströmt zu werden; wobei der kastenförmige Rahmen (8) an dem Loch (83) mit Mitteln (84) versehen ist, die dazu geeignet sind, das Loch (83) mit Mitteln zum Absaugen der Kochdünste zu verbinden.

15. Abzugshaube (C), umfassend:
- eine Kochvorrichtung nach einem der Ansprüche 1 bis 14;
- einen Rahmen (C2), umfassend ein Fach und eine Öffnung (C1) für den Zugang zum Fach;
- mindestens eine Führung (C3), die mit der Kochvorrichtung und dem Rahmen (C2) verbunden ist, um die Kochvorrichtung in Bezug auf den Rahmen (C2) zu bewegen, um die Kochvorrichtung in das Fach des Rahmens (C2) durch die Öffnung (C1) einzuführen oder von dort herauszuziehen.

16. Abzugshaube (C) nach Anspruch 15, wobei die mindestens eine Führung (C3) ein erstes Element umfasst, das an dem Rahmen (C2) befestigt und im Inneren des Faches angeordnet ist, und ein zweites Element, das verschiebbar auf dem ersten Element montiert ist; wobei das zweite Element an der Kochvorrichtung befestigt ist.

## Revendications

1. Dispositif de cuisson comprenant :
- une source de chaleur (1) :
- un dispositif (2) de support pour aliments ; ledit dispositif (2) étant composé de deux grilles (21, 22) qui délimitent un compartiment (V) dans lequel disposer les aliments à cuisiner ; ledit dispositif (2) comprenant un bord latéral (23) et un manche de saisie (24) ;
- un châssis de support (3) pour soutenir le dispositif de support (2) ;
ledit châssis de support (3) comprend :
- une paroi centrale (4) disposée en position pratiquement verticale ; ladite paroi centrale comprenant un bord inférieur (41) et un bord supérieur (42) ;
- deux parois latérales (5) reliées à ladite paroi centrale (4) et disposées orthogonales par rapport à ladite paroi centrale (4) ;
chaque paroi latérale (5) comprenant :
- un bord inférieur (51) d'appui, apte à être positionné sur un plan horizontal ;
- un bord vertical arrière (52) relié à ladite paroi centrale (4) ;
- un bord avant inférieur (53),
- un bord avant supérieur (54) et
- un bord avant intermédiaire (55) qui relie ledit bord avant inférieur (53) au dit bord avant supérieur (54) ;
où
ledit bord avant supérieur (54) des parois latérales (5) est incliné par rapport au bord inférieur (51) d'appui d'un angle (α1) compris entre 64° et 77° ;
ledit bord avant supérieur (54) des parois latérales (5) est incliné par rapport au bord avant intermédiaire (55) d'un angle (a3) compris entre 80° et 90° ;
ladite source de chaleur (1) est une grille électrique et ledit dispositif de cuisson comprenant des moyens de support (M) pour soutenir cette grille électrique entre lesdites parois latérales (4) du châssis de support ;
ledit dispositif (2) de support pour aliments étant appuyé au-dessus des bords avant supérieurs (54) des deux parois latérales (5) et présentant son bord latéral (23) en contact avec les bords avant intermédiaires (55) des parois latérales (5), de façon à ce que les grilles (21, 22) du dispositif de support sont inclinées d'un angle compris entre 64° et 77° par rapport à un plan horizontal.

2. Dispositif de cuisson selon la revendication 1, où ledit bord inférieur (51) d'appui des parois latérales (5) est incliné par rapport au bord vertical arrière (52) d'un angle (a2) compris entre 84° et 88°.

3. Dispositif de cuisson selon l'une quelconque des revendications précédentes, où ladite paroi centrale (4) et lesdites parois latérales (5) sont réalisées en une seule pièce à partir d'une tôle qui est d'abord coupée puis pliée en correspondance du bord vertical arrière (52) des parois latérales (5).

4. Dispositif de cuisson selon l'une quelconque des revendications précédentes, où lesdits moyens de support (M) comprennent un compartiment dans lequel s'enfile un segment du manche de saisie (12) de la grille électrique.

5. Dispositif de cuisson selon l'une quelconque des revendications de 1 à 3, où les moyens de support (M) consistent de languettes flexibles (6, 7) qui soutiennent un manche de saisie (12) de la grille électrique.

6. Dispositif de cuisson selon la revendication 5, où lesdits moyens de support (M) comprennent une languette centrale avant (6) et deux languettes latérales arrière (7) ; ladite languette centrale avant (6) coopère avec la surface supérieure du manche de saisie (12) et lesdites deux languettes latérales arrière (7) coopèrent avec la surface inférieure du manche de saisie (12).

7. Dispositif de cuisson selon l'une quelconque des revendications précédentes, où ladite grille électrique comprend un bouton de sécurité qui active la mise sous tension de la grille électrique et où lesdits moyens de support (M) écrasent ledit bouton de sécurité.

8. Dispositif de cuisson selon l'une quelconque des revendications précédentes, comprenant un élément de support (9) interposé entre la source de chaleur (1) et le châssis de support (3) pour soutenir la source de chaleur (1).

9. Dispositif de cuisson selon la revendication 8, comprenant des moyens de réglage (R) prévus sur le châssis de support (3) pour régler la distance entre le châssis de support (3) et l'élément de support (9).

10. Dispositif de cuisson selon la revendication 9, où lesdits moyens de réglage (R) comprennent une vis qui se visse dans un orifice fileté réalisé dans la paroi centrale (4) du châssis de support (3).

11. Dispositif de cuisson selon l'une quelconque des revendications de 8 à 10, où ledit élément de support (9) comprend un goujon (90) qui agit en tant que charnière entre ledit élément de support (9) et le châssis de support (3) ; ledit goujon (90) étant inséré dans des orifices (F) réalisés sur les parois latérales (5) du châssis de support (3).

12. Dispositif de cuisson selon l'une quelconque des revendications de 8 à 11, où lesdits moyens de support (M) sont prévus sur l'élément de support (9).

13. Dispositif de cuisson selon l'une quelconque des revendications de 1 à 7, où lesdits moyens de support (M) pour ladite grille électrique sont prévus en correspondance du bord supérieur (42) de la paroi centrale (4).

14. Dispositif de cuisson selon l'une quelconque des revendications précédentes, comprenant un châssis de forme rectangulaire (8) comprenant une paroi centrale (81) et quatre parois latérales (82) perpendiculaires à ladite paroi centrale (81) ; ledit châssis de forme rectangulaire (8) comprenant un compartiment (V1) délimité par ladite paroi centrale (81) et lesdites quatre parois latérales (82) ; ledit compartiment (V1) ayant des dimensions telles à pouvoir contenir le châssis de support (3) ; ledit châssis de forme rectangulaire (8) étant pivoté en correspondance du bord supérieur (42) de la paroi centrale (4) du châssis de support (3) et pouvant assumer une assiette de repos, où le châssis de support (3) est contenu à l'intérieur du compartiment (V1) du châssis de forme rectangulaire (8) et une assiette de fonctionnement où il est disposé avec sa paroi centrale (81) dans une assiette pratiquement perpendiculaire par rapport à la paroi centrale (4) du châssis de support (3) ; ladite paroi centrale (81) (du châssis de forme rectangulaire) présentant un orifice (83) destiné à être traversé par les fumées de cuisson ; ledit châssis de forme rectangulaire (8) présentant, en correspondance du dit orifice (83), des moyens (84) aptes à mettre en communication ledit orifice (83) avec des moyens d'aspiration des fumées de cuisson.

15. Hotte (C) comprenant:
- un dispositif de cuisson selon l'une quelconque des revendications de 1 à 14 ;
- un châssis (C2) comprenant un compartiment et une ouverture (C1) d'accès au compartiment ;
- au moins une coulisse (C3) reliée au dispositif de cuisson (C2) pour déplacer le dispositif de cuisson par rapport au châssis (C2) aux fins de pouvoir ranger ou extraire le dispositif de cuisson depuis le compartiment du châssis (C2) à travers l'ouverture (C1).

16. Hotte (C) selon la revendication 15, où ladite au moins une coulisse (C3) comprend un premier élément fixé au châssis (C2) et disposé à l'intérieur du compartiment et un second élément monté coulissant sur le premier élément ; ledit second élément étant fixé au dispositif de cuisson.
